# EUROPÄISCHE PATENTSCHRIFT

(11) **EP 3 873 829 B1**
(45) Veröffentlichungstag und Bekanntmachung des Hinweises auf die Patenterteilung: **09.08.2023**
(21) Anmeldenummer: 20701298.0
(22) Anmeldetag: 17.01.2020
(51) Int. Cl.: B65D 85/804

(54) **PORTIONSPACKUNG UND MASCHINE UND VERFAHREN ZUR ZUBEREITUNG EINES BRÜHGETRÄNKES**
PACKAGE, MACHINE AND METHOD FOR PREPARATION OF BEVERAGES
EMBALLAGE, MACHINE ET SYSTEME POUR LA PREPARATION DE BOISSONS

(30) Priorität: 22.01.2019 DE 102019101538
(43) Veröffentlichungstag der Anmeldung: 08.09.2021
(73) Patentinhaber: Melitta Single Portions GmbH & Co. KG, 32425 Minden (DE)
(72) Erfinder: FERNANDES DE CARVALHO, Kerstin, 33604 Bielefeld (DE); PAHNKE, Jan, 32427 Minden (DE); FELDMANN, Holger, 47877 Willich (DE)
(74) Vertreter: Dantz, Jan Henning
(86) Internationale Anmeldenummer: PCT/EP2020/051144
(87) Internationale Veröffentlichungsnummer: WO 2020/152053

(56) Entgegenhaltungen:
- WO-A1-2006/032565
- WO-A1-2013/046149
- WO-A1-2013/080073
- WO-A1-2014/153659
- WO-A1-2017/093015

## Beschreibung

Die vorliegende Erfindung betrifft eine Portionspackung mit einem flüssigkeitsdurchlässigen Filtermaterial, das eine Kammer umgibt, in der ein Extraktionsmaterial angeordnet ist, wobei an der Kammer eine bewegbare Verschlussvorrichtung vorgesehen ist, die von einer geschlossenen Position in eine die Kammer öffnende Position bewegbar ist, eine Maschine zur Zubereitung eines Brühgetränks mit einer Einrichtung zur Erzeugung von heißem Wasser, einem Halter für eine Portionspackung mit einem Extraktionsmaterial zum Anordnen der Portionspackung unter einem Zulauf für das heiße Wasser und einer Steuerung und einer Erkennungseinheit, und ein Verfahren zur Herstellung eines Brühgetränks.

Die DE 10 2014 109 768 A1 offenbart eine Vorrichtung zur Zubereitung von Brühgetränken, bei der an einem Boden einer Kapsel ein Lichtleiter vorgesehen ist, um über das Einleiten und Umlenken von Licht eine Identifikation der Kapsel vornehmen zu können. Eine solche Identifizierung der Kapsel ermöglicht eine optimierte Programmsteuerung der Vorrichtung. Es ist allerdings nicht möglich, zur erkennen, ob eine Kapsel sich in einer geöffneten oder geschlossenen Position befindet.

Bei der EP 1 786 303 B1 wird über eine Erfassungseinrichtung eine Identifikationsmarkierung an einer Kapsel erkannt, wobei die Erfassungseinrichtung an der Gleitschiene zur Zuführung der Kapsel vorgesehen ist. Auch hier kann zwar die Kapsel identifiziert werden, aber es ist nicht möglich, unterschiedliche Zustände der Kapsel zu erfassen.

Die WO 2013/080073 offenbart eine Portionspackung mit einem flüssigkeitsdurchlässigen Material und einer gelochten Folie, die zur Erkennung eingesetzt werden kann. Die Portionspackung mit dem Extraktionsmaterial bleibt auch nach Entfernung der Folie in einem geschlossenen Zustand und wird nicht geöffnet.

WO2006/032565, WO2013/046149 und WO2014/153659 offenbaren weitere Portionspackungen mit einer Markierung zur Identifikation.

Es ist daher Aufgabe der vorliegenden Erfindung, eine Portionspackung, eine Maschine und ein Verfahren zur Zubereitung eines Brühgetränkes zu schaffen, die eine verbesserte Erkennung einer Portionspackung aufweisen, um die Handhabung zu vereinfachen.

Diese Aufgabe wird mit einer Portionspackung mit den Merkmalen des Anspruches 1, einer Maschine mit den Merkmalen des Anspruches 7 und einem Verfahren mit den Merkmalen des Anspruches 11 gelöst.

Bei der erfindungsgemäßen Portionspackung ist ein Extraktionsmaterial in einer Kammer angeordnet, die von einem flüssigkeitsdurchlässigen Filtermaterial umgeben ist, wobei eine bewegbare Verschlussvorrichtung zum Öffnen der Kammer vorgesehen ist, die von einer geschlossenen Position in eine geöffnete Position bewegbar ist, wobei an der bewegbaren Verschlussvorrichtung mindestens eine Markierung zur Identifizierung der Portionspackung vorgesehen ist. Dadurch kann über eine Erkennungseinheit einerseits eine Identifizierung der Portionspackung erfolgen, beispielsweise um Zubereitungsparameter beim Brühen des Getränkes zu steuern, wie die Temperatur des heißen Wassers oder die Menge an heißem Wasser, und andererseits kann über die Erkennungseinheit erfasst werden, ob sich die Portionspackung in einer geschlossenen oder in eine geöffneten Position befindet, da die Markierung an der bewegbaren Verschlussvorrichtung angeordnet ist. Durch das Bewegen der Verschlussvorrichtung bewegt sich auch die Markierung, und somit kann auch eine geöffnete Position der Portionspackung detektiert werden.

Vorzugsweise weist die Verschlussvorrichtung mindestens eine verschwenkbare Klappe auf. Die Klappe kann dabei an einer Oberseite der Portionspackung angeordnet sein, wenn die Portionspackung sich in einer Gebrauchsposition befindet, also in einen Halter einer Maschine zur Zubereitung eines Brühgetränkes eingesetzt ist. Bevorzugt weist die Verschlussvorrichtung mehrere verschwenkbare Klappen auf, die beispielsweise dreieckförmig ausgebildet sind und umlaufend eine obere Öffnung in der geöffneten Position umgeben. Je nach Gestaltung der Portionspackung können an der Oberseite zwischen zwei und zehn verschwenkbare Klappen vorgesehen sein, vorzugsweise zwischen vier und acht Klappen, insbesondere sechs Klappen.

In einer weiteren Ausgestaltung ist die Markierung jeweils endseitig an einer Klappe vorgesehen, wobei in der geschlossenen Position der Portionspackung die Markierungen an den einzelnen Klappen eine gemeinsame Fläche bilden, beispielsweise eine Farbfläche oder eine andere Codierung, wie ein Strichcode oder ein Symbol. Zumindest ein Teil der verschwenkbaren Klappen kann dabei endseitig eine Markierung aufweisen, so dass detektiert werden kann, ob diese Klappen sich in einer geöffneten oder geschlossenen Position befinden.

Vorzugsweise umfasst die Portionspackung einen Stützkörper aus Kartonage, der mit dem Filtermaterial verbunden ist, wobei der Stützkörper eine Faltkante aufweist, an der die Klappen der Verschlussvorrichtung verschwenkbar gelagert sind. Durch Befeuchtung der Faltkante kann die Verschlussvorrichtung mit den Klappen dann von einer geschlossenen Position in die geöffnete Position bewegt werden, da durch die Befeuchtung Quellprozesse eingeleitet werden, die an der Faltkante für ein Verschwenken der Klappen sorgen. Die Portionspackung kann beispielsweise so ausgebildet sein, wie dies in der DE 10 2018 101 338 offenbart ist.

Bei der erfindungsgemäßen Maschine zur Zubereitung eines Brühgetränks kann über eine Erkennungseinheit eine an einer bewegbaren Verschlussvorrichtung der Portionspackung angeordnete Markierung in der geschlossenen Position erfasst werden, so dass einerseits eine Identifizierung der Portionspackung erfolgen kann und andererseits auch der geschlossene und geöffnete Zustand der Portionspackung detektierbar ist. Die Erkennungseinheit befindet sich dabei vorzugsweise oberhalb der Portionspackung benachbart zu einem Zulauf für heißes Wasser. Die Erkennungseinheit kann beispielsweise eine optische Erkennungseinheit sein, die eine Lichtquelle und ein optisches Lesegerät aufweist. Als Lichtquelle kann eine LED eingesetzt werden, die eine Verschlussvorrichtung der Portionspackung beleuchtet, wobei über das optische Lesegerät die Reflektion erfasst wird, beispielsweise über eine Kamera. Die Markierung kann beispielsweise als Farbmarkierung ausgebildet sein, so dass über einen RGB-Sensor eine Farberkennung zur Erfassung unterschiedlicher Typen an Portionspackungen vorgenommen werden kann.

Bei dem erfindungsgemäßen Verfahren wird nach einem Einlegen einer Portionspackung in einen Halter einer Maschine eine Erfassung einer Markierung an einer Verschlussvorrichtung an einer Oberseite der Portionspackung durch ein Lesegerät der Maschine vorgenommen, bevor dann der Brühvorgang eingeleitet wird. Vorzugsweise wird nach einer Erfassung einer Portionspackung in dem Halter der Maschine durch eine Steuerung eine geringe Menge heißes Wasser zum Öffnen auf die Portionspackung aufgegeben, um nach einer vorbestimmten Wartezeit, beispielsweise zwischen 2 s und 30 s, insbesondere 4 s bis 15 s, erneut heißes Wasser auf die dann geöffnete Portionspackung zum Brühen des Getränks aufzugeben. Dieser zweistufige Prozess kann durch die Steuerung überwacht werden, indem zunächst die geschlossene Position der Portionspackung detektiert wird und dann nach dem Öffnen der Portionspackung geprüft wird, ob sich die Verschlussvorrichtung auch tatsächlich nicht noch in der geschlossenen Position befindet. Dadurch kann die Ausgabe von heißem Wasser verhindert werden, falls eine Fehlfunktion vorliegt, was das Verletzungsrisiko für den Benutzer reduziert. Über die Erfassungseinheit kann geprüft werden, ob die Portionspackung durch die erste Aufgabe von heißem Wasser auch geöffnet wurde. Gleichzeitig kann auch die Gesamtzubereitungszeit optimiert werden, da nicht unbedingt eine fest definierte Wartezeit zwischen der ersten und der weiteren Wasserzugabe liegen muss, sondern erkannt werden kann, ab welchem Zeitpunkt die Portionspackung offen genug ist, um im Prozess fortzufahren.

Ferner kann optional die Steuerung eingesetzt werden, um eine Ausgabe von heißem Wasser zu blockieren, wenn keine Portionspackung in dem Halter der Maschine durch die Erkennungseinheit oder eine bereits benutzte Portionspackung erkannt wurde. Dies reduziert das Verletzungsrisiko für den Benutzer weiter, da kein Einlegen der Portionspackung im bereits gestarteten Prozess erfolgen kann.

Die Erfindung wird nachfolgend anhand eines Ausführungsbeispiels mit Bezug auf die beigefügten Zeichnungen näher erläutert. Es zeigen:

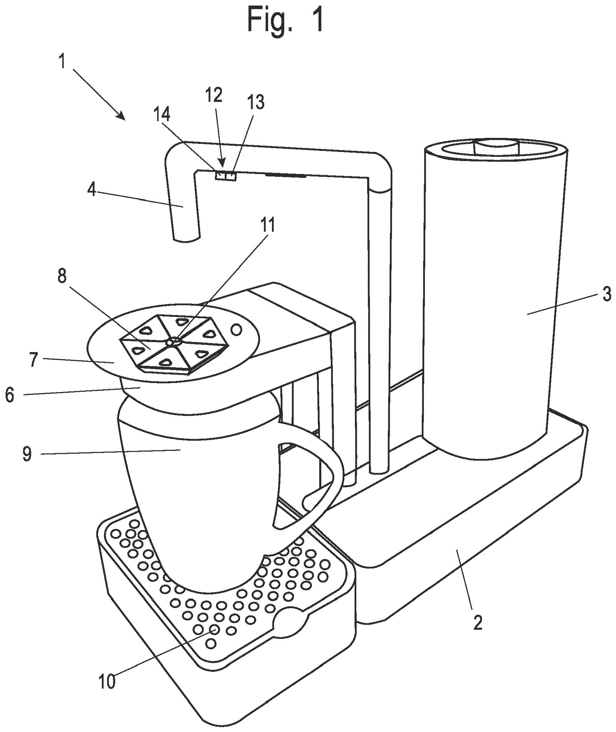

- Figur 1: eine schematische perspektivische Ansicht einer Maschine zur Zubereitung eines Brühgetränks;
- Figur 2: eine schematische Ansicht einer in der Maschine eingesetzten Portionspackung bei der Erkennung;
- Figur 3: eine perspektivische Ansicht einer Portionspackung;
- Figuren 4A bis 4D: mehrere schematische Ansichten der Erkennungseinheit in unterschiedlichen Phasen der Herstellung eines Brühgetränks, und
- Figur 5: eine schematische Ansicht einer beweglichen Erkennungseinheit, die eine dynamische Messung ermöglicht.

Eine Maschine 1 umfasst ein Gehäuse 2, an dem ein vorzugsweise abnehmbarer Frischwasserbehälter 3 vorgesehen ist, von dem Wasser über eine Pumpe und eine Heizeinrichtung förderbar ist, um heißes Wasser an einem Zulauf 4 auszugeben. Die Maschine 1 weist eine stationäre Haltevorrichtung 6 an dem Gehäuse 2 auf, in die ein Halter 7 eingefügt ist, der eine Aufnahme für eine Portionspackung 8 aufweist. Die Portionspackung 8 befindet sich dabei unterhalb des Zulaufes 4 und weist an der Oberseite eine Markierung 11 auf, die über eine Erkennungseinheit 12 erfasst werden kann. Die Erkennungseinheit 12 weist hierfür eine Lichtquelle 13, beispielsweise eine LED, auf, über die Licht auf die Oberseite der Portionspackung 8 abgestrahlt wird. Benachbart zu der Lichtquelle 13 ist ein optisches Lesegerät 14 vorgesehen, beispielsweise mit einem RGB-Sensor, um das von der Markierung 11 reflektierte Licht zu erfassen. Eine farbige Oberfläche der Markierung 11 kann somit durch den Sensor erfasst werden und zur Typenidentifizierung eingesetzt werden. Die farbige Oberfläche kann beispielsweise durch Bedrucken oder ein aufgeklebtes Etikett aufgebracht sein.

Während des Brühvorgangs wird dann auf die geöffnete Portionspackung 8 über den Zulauf 4 heißes Wasser aufgebeben, das durch die Portionspackung 8 strömt und unterhalb des Halters 7 in eine Tasse 9 eingeleitet wird, die auf einer Tropfschale 10 der Maschine 1 abgestellt ist.

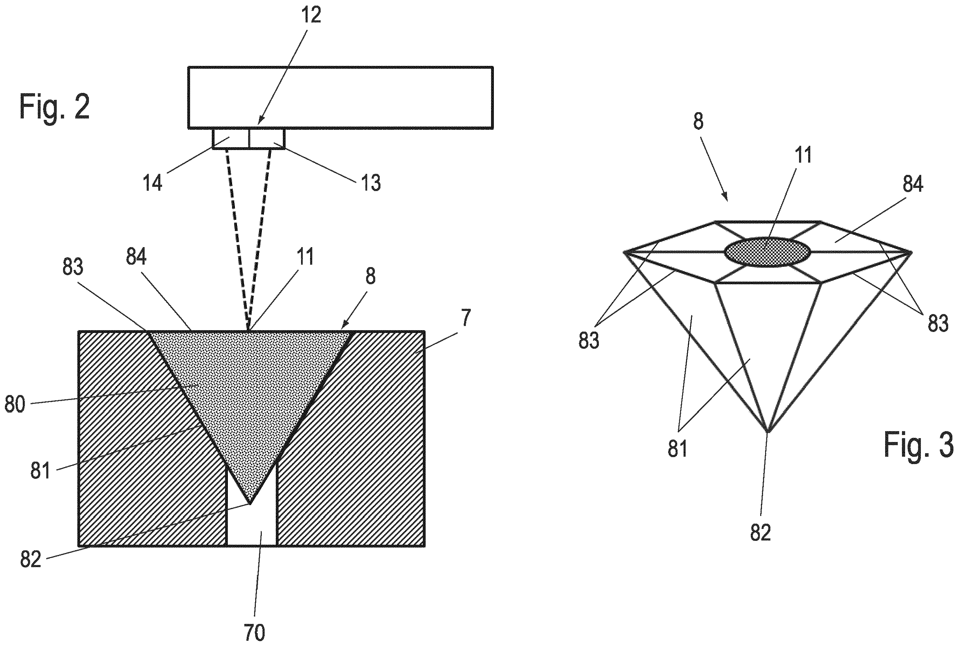

In Figur 2 ist die Erkennungseinheit 12 schematisch dargestellt, die eine Lichtquelle 13 und ein optisches Lesegerät 14 aufweist. Die Erkennungseinheit 12 ist oberhalb der Portionspackung 8 angeordnet, die in dem Halter 7 aufgenommen ist. Die Portionspackung 8 umfasst ein flüssigkeitsdurchlässiges Filtermaterial, beispielsweise ein Papier oder ein Vliesstoff, das Seitenwände 81 besitzt, die schräg zulaufen und im unteren Bereich an einer Spitze 82 münden. An der Oberseite der Seitenwände 81 ist eine Faltkante 83 vorgesehen, an der eine Verschlussvorrichtung 84 verschwenkbar gelagert ist. Die Markierung 11 befindet sich dabei an der Verschlussvorrichtung 84, die in Figur 2 in einer geschlossenen Position dargestellt ist. Ein Extraktionsmaterial, wie Kaffee oder Tee, ist in einer Kammer 80 innerhalb der Portionspackung 8 angeordnet.

Ferner ist erkennbar, dass sich die untere Spitze 82 der Portionspackung 8 über einem Ablaufkanal 70 in dem Halter 7 befindet.

Die Lichtquelle 13 emittiert Licht auf die Markierung 11 an der Oberseite der Portionspackung 8, wie dies durch die gestrichelten Linien dargestellt ist. Das Lesegerät 14 erfasst die von der Markierung 11 reflektierten Lichtstrahlen, so dass durch eine farbige Ausgestaltung der Markierung 11 an dem optischen Lesegerät 14 erfasst werden kann, welcher Typ von Portionspackung 8 in dem Halter 7 angeordnet ist. Um Umgebungslichteinflüsse zu minimieren kann auch eine Kombinationsmessung, das heißt eine Messung ohne Beleuchtung durch die Lichtquelle 13 und eine Messung mit Beleuchtung durch die Lichtquelle 13 und eine anschließende Signalauswertung, erfolgen.

In Figur 3 ist eine Portionspackung 8 dargestellt. Die Portionspackung 8 ist pyramidenförmig ausgebildet und umfasst eine untere Spitze 82, von der sich Seitenwände 81 aufspreizend nach oben erstrecken. An jeder Seitenwand 81 ist an der Oberseite eine Faltkante 83 vorgesehen, die die Seitenwände 81 mit einer oberen Verschlussvorrichtung 84 verbindet, die eine Vielzahl von verschwenkbaren Klappen aufweist, die in der verschlossenen Position im Wesentlichen horizontal ausgerichtet sind. Die horizontale Ausrichtung bezieht sich dabei auf die in den Halter 7 eingesetzte Position bei der Getränkezubereitung. Die Verschlussvorrichtung 84 mit den verschwenkbaren Klappen umfasst endseitig die Markierung 11, die wahlweise an einer einzigen Klappe vorgesehen werden kann, vorzugsweise aber sich durch mehrere Flächen einzelner Klappen zusammensetzt. Beispielsweise können drei Klappen am Ende eine farbige Markierung aufweisen, die zusammen die durchgängige Markierung 11 in der geschlossenen Position bilden.

Die Portionspackung 8 kann im Wesentlichen so ausgebildet sein, wie dies in der Anmeldung DE 10 2018 101 338 beschrieben ist. Insbesondere kann die Portionspackung 8 ein flüssigkeitsdurchlässiges Filtermaterial aufweisen, das in einem ringförmigen Stützkörper gehalten ist. Der Stützkörper kann dabei die Faltkanten 83 ausbilden und aus Kartonage oder einem anderen quellbaren Material hergestellt sein. Durch Aufgeben einer geringen Menge an heißem Wasser auf die Oberseite der Portionspackung 8 gelangt das Wasser zu den Faltkanten 83 und bewirkt dort Quellprozesse, die für ein Öffnen der Verschlussvorrichtung sorgen, indem die einzelnen Klappen nach oben aufschwenken. Eine mechanische Verriegelung der Klappen kann somit geöffnet werden, wie dies in der genannten Anmeldung beschrieben ist.

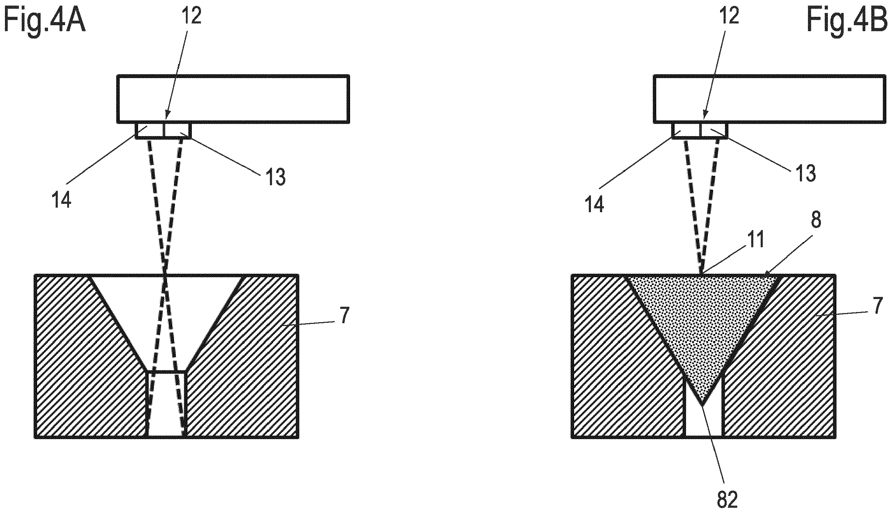

Die Steuerung der Maschine 1 zur Zubereitung eines Brühgetränks wird in den unterschiedlichen Schritten in den Figuren 4A bis 4D erläutert:
In Figur 4A ist in den Halter 7 keine Portionspackung 8 eingesetzt, und die Erkennungseinheit 12 kann dies detektieren, da durch das optische Lesegerät 14 keine Reflektion der durch die Lichtquelle 13 ausgesendeten Lichtstrahlen erfasst wird. Eine Ausgabe von heißem Wasser kann somit blockiert werden, um das Verletzungsrisiko für den Benutzer zu minimieren. Zudem kann an einer Anzeige der Maschine 1 die Information ausgegeben werden, dass in dem Halter 7 keine Portionspackung 8 angeordnet ist.

In Figur 4B ist eine Portionspackung 8 in den Halter 7 eingesetzt worden. Über die Erkennungseinheit 12 wird die Markierung 11 an der Oberseite der Portionspackung 8 erfasst, indem der von der Lichtquelle 13 ausgesendete Lichtstrahl durch die Markierung 11 reflektiert und durch das optische Lesegerät 14 erkannt wird. Diese Erfassung kann der Steuerung das Signal geben, dass eine geschlossene Portionspackung 8 in dem Halter 7 angeordnet ist und der Brühvorgang eingeleitet werden kann.

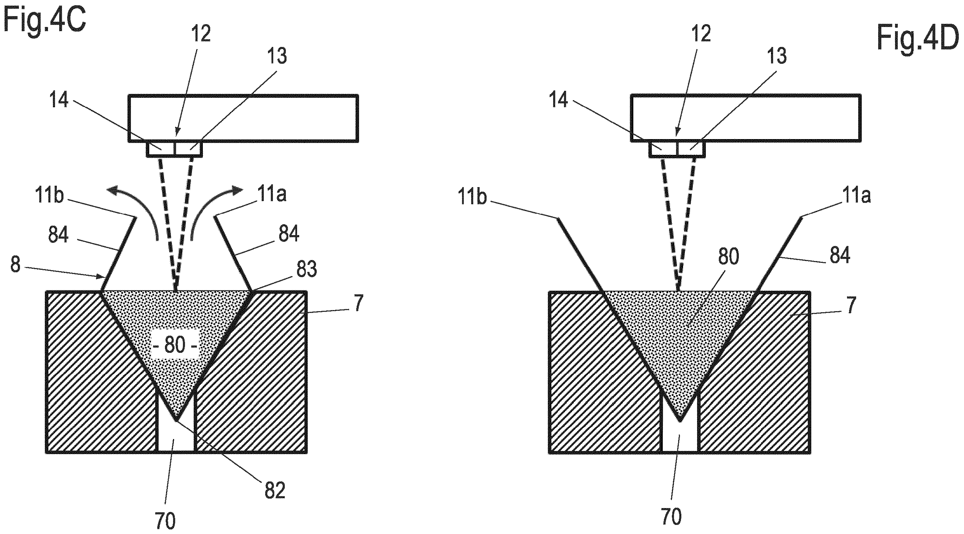

In einem ersten Schritt wird nun auf die Portionspackung 8 auf die Oberseite eine geringe Menge an heißem Wasser aufgegeben, um die Verschlussvorrichtung 84 der Portionspackung 8 zu öffnen, wie dies in Figur 4C dargestellt ist. Durch das Aufgeben von heißem Wasser auf die Portionspackung 8 wird die Verschlussvorrichtung 84 mit den einzelnen umlaufend angeordneten Klappen geöffnet, wobei die Klappen eine Oberseite der Kammer 80 für den Brühvorgang freigeben. Die Erkennungseinheit 12 kann nach einer vorbestimmten Wartezeit, beispielsweise zwischen 2 s und 20 s, erfassen, ob die Verschlussvorrichtung 84 sich zumindest teilweise in der geöffneten Position befindet. In Figur 4C ist erkennbar, dass ein erster Abschnitt 11a der Markierung 11 und ein zweiter Abschnitt 11b der Markierung 11 an unterschiedlichen Klappen der Verschlussvorrichtung 84 vorgesehen sind und durch Bewegen der Markierung 11 die Erkennungseinheit 12 nun eine zumindest teilweise geöffnete Position der Portionspackung 8 erfassen kann.

In Figur 4D ist die vollständig geöffnete Position der Portionspackung 8 schematisch dargestellt, in der die gesamte Fläche der Kammer 80 oberhalb des Extraktionsmaterials zugänglich ist, damit von oben heißes Wasser aufgebeben werden kann. Die Erkennung der geöffneten Position der Verschlussvorrichtung 84 kann beispielsweise darüber erfolgen, dass in der Kammer 80 ein Extraktionsmaterial, beispielsweise braunes Kaffeemehl, angeordnet ist, so dass die Farbe Braun durch das optische Lesegerät erfasst werden kann. Die Markierung 11 kann in anderen Farben als das Extraktionsmaterial, wie Rot, Grün oder Blau, vorgesehen werden, so dass durch die Farberkennung sowohl erkannt werden kann, ob keine Portionspackung in den Halter 7 eingesetzt wird, also keine Reflektion erfolgt, oder ob eine Portionspackung 8 in der geschlossenen Position eingefügt wird, oder bei Detektion des braunen Kaffeemehls die Portionspackung 8 in einer geöffneten Position angeordnet ist.

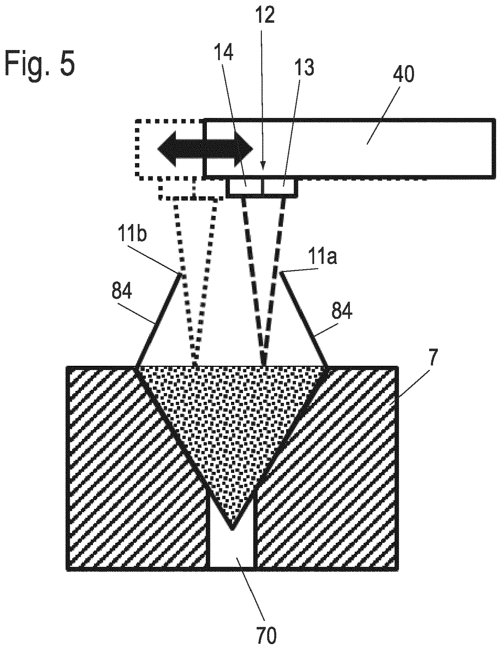

In einer besonders vorteilhaften Gestaltung der Maschine ist die Erkennungseinheit in einem beweglichen Teil 40, beispielsweise einem beweglichen Zulauf angeordnet, damit sie beim Einlegen und Entnehmen der Portionspackung nicht stört, aber während der Messung in der richtigen Relativposition (zB. senkrecht darüber) zur Portionspackung 8 steht. Das bewegliche Teil 40 kann über einen Antrieb und die Steuerung der Maschine bewegt werden. Eine bewegliche Erkennungseinheit ermöglicht darüber hinaus eine dynamische Messung des Öffnungswinkels. Dies ist in Figur 5 dargestellt. Im Gegensatz zur statischen Messung, mit der eine bestimmte Mindestöffnung festgestellt werden kann, können so beliebige Öffnungswinkel zwischen 0° und 90° festgestellt werden.

In dem dargestellten Ausführungsbeispiel enthält die Portionspackung 8 Kaffeemehl. Es ist auch möglich, statt Kaffeemehl Tee oder ein anderes Extraktionsmaterial vorzusehen. Zudem kann die Portionspackung 8 zur Zubereitung von Suppen oder anderen Nahrungsmitteln eingesetzt werden.

### Bezugszeichenliste

- 1: Maschine
- 2: Gehäuse
- 3: Frischwasserbehälter
- 4: Zulauf
- 6: Haltevorrichtung
- 7: Halter
- 8: Portionspackung
- 9: Tasse
- 10: Tropfschale
- 11: Markierung
- 11a: Abschnitt
- 11b: Abschnitt
- 12: Erkennungseinheit
- 13: Lichtquelle
- 14: Lesegerät
- 70: Ablaufkanal
- 80: Kammer
- 81: Seitenwand
- 82: Spitze
- 83: Faltkante
- 84: Verschlussvorrichtung

## Patentansprüche

1. Portionspackung (8) mit einem flüssigkeitsdurchlässigen Filtermaterial, das eine Kammer (80) umgibt, in der ein Extraktionsmaterial angeordnet ist, wobei an der Kammer (80) eine bewegbare Verschlussvorrichtung (84) vorgesehen ist, die von einer geschlossenen Position in eine die Kammer (80) öffnende Position bewegbar ist, **dadurch gekennzeichnet, dass** an der bewegbaren Verschlussvorrichtung (84) mindestens eine Markierung (11) zur Identifizierung der Portionspackung (8) vorgesehen ist.

2. Portionspackung nach Anspruch 1, **dadurch gekennzeichnet, dass** die Verschlussvorrichtung (84) mindestens eine verschwenkbare Klappe aufweist.

3. Portionspackung nach Anspruch 2, **dadurch gekennzeichnet, dass** die Verschlussvorrichtung (84) mehrere verschwenkbare Klappen aufweist, die in der geöffneten Position eine Öffnung zu der Kammer (80) umlaufend umgeben.

4. Portionspackung nach Anspruch 2 oder 3, **dadurch gekennzeichnet, dass** die Markierung (11) jeweils an zumindest einem Teil der Klappen endseitig vorgesehen ist und die Arme in der geschlossenen Position der Portionspackung (8) miteinander verriegelt sind.

5. Portionspackung nach einem der vorhergehenden Ansprüche, **dadurch gekennzeichnet, dass** die Markierung (11) durch eine Farbfläche gebildet ist.

6. Portionspackung nach einem der vorhergehenden Ansprüche, **dadurch gekennzeichnet, dass** die Portionspackung (8) einen Stützkörper aus Kartonage umfasst, der mit dem Filtermaterial verbunden ist und der Stützkörper eine Faltkante (83) aufweist, an der die Klappen der Verschlussvorrichtung (84) verschwenkbar gelagert sind und durch Befeuchtung der Faltkante (83) die Verschlussvorrichtung (84) von der geschlossenen Position in die geöffnete Position bewegbar ist.

7. Maschine zur Zubereitung eines Brühgetränkes, umfassend:
- eine Einrichtung zur Erzeugung von heißem Wasser;
- einen Halter (7) für eine Portionspackung (8) mit einem Extraktionsmaterial zum Anordnen der Portionspackung (8) unter einem Zulauf für das heiße Wasser;
- eine Steuerung und eine Erkennungseinheit (12),
**dadurch gekennzeichnet, dass** über die Erkennungseinheit (12) eine an einer bewegbaren Verschlussvorrichtung (4) der Portionspackung (8) angeordnete Markierung (11) in der geschlossenen Position erfassbar ist.

8. Maschine nach Anspruch 7, **dadurch gekennzeichnet, dass** mittels der Erkennungseinheit (12) eine geschlossene Position und eine geöffnete Position der Portionspackung (8) erfassbar ist.

9. Maschine nach Anspruch 7 oder 8, **dadurch gekennzeichnet, dass** die Markierung (11) an der Verschlussvorrichtung (84) beim Öffnen der Verschlussvorrichtung (84) verschwenkt wird.

10. Maschine nach einem der Ansprüche 7 bis 9, **dadurch gekennzeichnet, dass** die Erkennungseinheit (12) eine Lichtquelle (13) und ein optisches Lesegerät (14) aufweist.

11. Verfahren zum Herstellen eines Brühgetränks, mit den folgenden Schritten:
- Einlegen einer ein flüssigkeitsdurchlässiges Filtermaterial aufweisenden Portionspackung (8) mit einem Extraktionsmaterial in einen Halter (7) einer Maschine (1);
- Erfassen einer Markierung (11) an einer Verschlussvorrichtung (84) an einer Oberseite der Portionspackung (8) durch eine Erkennungseinheit (12) der Maschine (1);
- Öffnen der Verschlussvorrichtung (84) und Bewegen der Markierung (11) der Portionspackung (8);
- Zuführen von heißem Wasser zu der Öffnung an der Oberseite der Portionspackung (8) und Brühen eines Getränks, und
- Auffangen des gebrühten Getränks unter der Portionspackung (8).

12. Verfahren nach Anspruch 11, **dadurch gekennzeichnet, dass** nach einer Erfassung einer geschlossenen Portionspackung (8) durch die Steuerung heißes Wasser zur Öffnung der Portionspackung (8) auf diese aufgegeben wird, und nach einer Wartezeit, insbesondere nach Erkennung einer erfolgten Öffnung der Portionspackung (8), erneut heißes Wasser auf die geöffnete Portionspackung (8) zum Brühen des Getränkes aufgegeben wird.

13. Verfahren nach Anspruch 12, **dadurch gekennzeichnet, dass** über die Erfassungseinheit (12) geprüft wird, ob die Portionspackung (8) nach dem ersten Aufgeben von heißem Wasser geöffnet wurde.

14. Verfahren nach einem der Ansprüche 11 bis 13, **dadurch gekennzeichnet, dass** über eine Steuerung eine Ausgabe von heißem Wasser blockiert wird, wenn keine Portionspackung (8) in dem Halter (7) erkannt wird.

15. Verfahren nach einem der Ansprüche 11 bis 14, **dadurch gekennzeichnet, dass** über eine Steuerung eine Ausgabe von heißem Wasser blockiert wird, wenn eine bereits geöffnete Portionspackung (8), insbesondere eine bereits benutzte Portionspackung (8), in dem Halter (7) erkannt wird.

## Claims

1. Single-serve packaging (8), comprising a liquid-permeable filter material surrounding a chamber (80) in which an extraction material is arranged, wherein a movable closure device (84) is provided on the chamber (80) which is movable from a closed position into a position opening the chamber (80), **characterized in that** at least one marking (11) for identifying the single-serve packaging (8) is provided on the movable closure device (84).

2. Single-serve packaging according to claim 1, **characterized in that** the closure device (84) comprises at least one pivotable flap.

3. Single-serve packaging according to claim 2, **characterized in that** the closure device (84) comprises a plurality of pivotable flaps which in the open position circumferentially surround an opening to the chamber (80).

4. Single-serve packaging according to claim 2 or 3, **characterized in that** the marking (11) is provided in each case at the end of at least one part of the flaps, and the arms are interlocked with each other in the closed position of the single-serve packaging (8).

5. Single-serve packaging according to one of the preceding claims, **characterized in that** the marking (11) is formed by a colored surface.

6. Single-serve packaging according to one of the preceding claims, **characterized in that** the single-serve packaging (8) comprises a support body made of cardboard which is connected to the filter material and the support body has a folding edge (83) on which the flaps of the closure device (84) are pivotably mounted and, by moistening the folding edge (83), the closure device (84) can be moved from the closed position into the open position.

7. Machine for preparing a brewed beverage, comprising:
- a device for the production of hot water;
- a holder (7) for a single-serve packaging (8) having an extraction material for arranging the single-serve packaging (8) under a feed for the hot water;
- a controller and a detection unit (12),
**characterized in that** a marking (11) arranged on a movable closure device (4) of the single-serve packaging (8) can be detected in the closed position via the detection unit (12).

8. Machine according to claim 7, **characterized in that** a closed position and an open position of the single-serve packaging (8) can be detected by means of the detection unit (12).

9. Machine according to claim 7 or 8, **characterized in that** the marking (11) on the closure device (84) is pivoted when the closure device (84) is opened.

10. Machine according to one of claims 7 to 9, **characterized in that** the detection unit (12) comprises a light source (13) and an optical reader (14).

11. Method for preparing a brewed beverage, comprising the following steps:
- inserting a single-serve packaging (8) comprising a liquid-permeable filter material with an extraction material into a holder (7) of a machine (1);
- detecting a marking (11) on a closure device (84) on an upper side of the single-serve packaging (8) by a detection unit (12) of the machine (1);
- opening the closure device (84) and moving the marking (11) of the single-serve packaging (8);
- supplying hot water to the opening at the top of the single-serve packaging (8) and brewing a beverage, and
- collecting the brewed beverage under the single-serve packaging (8).

12. Method according to claim 11, **characterized in that,** after a closed single-serve packaging (8) has been detected by the controller, hot water is applied to the single-serve packaging (8) in order to open it, and after a waiting time, in particular after detection of a successful opening of the single-serve packaging (8), hot water is again applied to the opened single-serve packaging (8) in order to brew the beverage.

13. Method according to claim 12, **characterized in that** it is checked via the detection unit (12) whether the single-serve packaging (8) has been opened after the first application of hot water.

14. Method according to one of claims 11 to 13, **characterized in that** a dispensing of hot water is blocked via a controller if no single-serve packaging (8) is detected in the holder (7).

15. Method according to one of claims 11 to 14, **characterized in that** a dispensing of hot water is blocked via a controller if an already opened single-serve packaging (8), in particular an already used single-serve packaging (8), is detected in the holder (7).

## Revendications

1. Emballage de portion (8) en un matériau de filtre perméable au liquide qui entoure une chambre (80) contenant un produit d'extraction,
la chambre (80) étant munie d'un dispositif d'obturation (84), mobile, qui peut être déplacé d'une position fermée à une position ouvrant la chambre (80),
emballage **caractérisé en ce que**
le dispositif d'obturation mobile (84) comporte au moins un marquage (11) pour identifier l'emballage de portion (8).

2. Emballage de portion selon la revendication 1,
**caractérisé en ce que**
le dispositif d'obturation (84) comporte au moins un volet pivotant.

3. Emballage de portion selon la revendication 2,
**caractérisé en ce que**
le dispositif d'obturation (84) comporte plusieurs volets pivotants qui, en position ouverte, entourent en tournant une ouverture vers la chambre (80).

4. Emballage de portion selon la revendication 2 ou 3,
**caractérisé en ce que**
le marquage (11) est prévu respectivement sur au moins une partie des volets côté extrémité et les bras sont verrouillés les uns aux autres en position fermée de l'emballage de portion (8).

5. Emballage de portion selon l'une des revendications précédentes,
**caractérisé en ce que**
le marquage (11) est sous la forme d'une surface en couleur.

6. Emballage de portion selon l'une des revendications précédentes,
**caractérisé en ce que**
l'emballage de portion (8) comprend un organe de support en carton relié au matériau de filtre et l'organe d'appui présente une arête de pliage (83) à laquelle sont reliés, de manière pivotante les volets du dispositif d'obturation (84) et qui, par l'humidification de l'arête de pliage (83), déplacent le dispositif d'obturation (84) de la position fermée à la position ouverte.

7. Machine de préparation d'une infusion comprenant :
- une installation pour fournir de l'eau chaude,
- un support (7) pour un emballage de portion (8) avec un produit d'extraction pour mettre l'emballage de portion (8) sous l'arrivée de l'eau chaude,
- une commande et une unité de reconnaissance (12),
machine **caractérisée en ce que**
l'unité de reconnaissance (12) peut saisir un marquage (11) prévu sur un dispositif d'obturation mobile (4) de l'emballage de portion (8), en position fermée.

8. Machine selon la revendication 7,
**caractérisée en ce que**
l'unité de reconnaissance (12) permet de saisir l'emballage de portion (8) en position fermée et en position ouverte.

9. Machine selon la revendication 7 ou 8,
**caractérisée en ce que**
le marquage (11) du dispositif d'obturation (84) est basculé par l'ouverture du dispositif d'obturation (84).

10. Machine selon l'une des revendications 7 à 9,
**caractérisée en ce que**
l'unité de reconnaissance (12) comporte une source lumineuse (13) et un lecteur optique (14).

11. Procédé d'obtention d'une infusion comprenant les étapes suivantes consistant à :
- mettre en place un emballage de portion (8) ayant un matériau de filtre perméable au liquide avec un produit d'extraction, dans un support (7) d'une machine (1),
- saisir un marquage (11) d'un dispositif d'obturation (84) sur le dessus de l'emballage de portion (8) par une unité de reconnaissance (12) de la machine (1),
- ouvrir le dispositif d'obturation (84) et déplacer le marquage (11) de l'emballage de portion (8),
- fournir l'eau chaude à l'ouverture du dessus de l'emballage de portion (8) et infuser la boisson, et
- recueillir la boisson infusée sous l'emballage de portion (8).

12. Procédé selon la revendication 11,
**caractérisé en ce que**
après une saisie d'un emballage de portion (8), fermé, la commande fournit l'eau chaude sur l'emballage pour ouvrir l'emballage de portion (8) et après un temps d'attente, notamment après la reconnaissance de l'ouverture effective de l'emballage de portion (8), on fournit de nouveau de l'eau chaude sur l'emballage de portion (8) ouvert pour infuser la boisson.

13. Procédé selon la revendication 12,
**caractérisé en ce que**
par l'unité de reconnaissance (12) on vérifie que l'emballage de portion (8) a été ouvert par l'application de l'eau chaude.

14. Procédé selon l'une des revendications 11 à 13,
**caractérisé en ce que**
par une commande on bloque la fourniture d'eau chaude si aucun emballage de portion (8) n'a été reconnu dans le support (7).

15. Procédé selon l'une des revendications 11 à 14,
**caractérisé en ce que**
par une commande on bloque la distribution d'eau chaude si un emballage de portion (8) déjà ouvert a été reconnu notamment comme emballage de portion (8) déjà utilisé dans le support (7).
